# EUROPÄISCHE PATENTSCHRIFT

(11) **EP 2 945 480 B1**
(45) Veröffentlichungstag und Bekanntmachung des Hinweises auf die Patenterteilung: **25.07.2018**
(21) Anmeldenummer: 14700876.7
(22) Anmeldetag: 16.01.2014
(51) Int. Cl.: A01M 29/08, B32B 5/14, B23K 26/36, B32B 27/36, B32B 17/10

(54) **VOGELSCHUTZVERGLASUNG**
BIRD PROTECTION GLAZING
VITRIFICATION ANTI-OISEAUX

(30) Priorität: 18.01.2013 EP 13151893
(43) Veröffentlichungstag der Anmeldung: 25.11.2015
(73) Patentinhaber: Covestro Deutschland AG, 51373 Leverkusen (DE)
(72) Erfinder: KUHLMANN, Timo, 42799 Leichlingen (DE); ERKELENZ, Michael, 47239 Duisburg (DE); BRAL, Emmanuel, B-Eeklo Eeklo (BE)
(74) Vertreter: Levpat
(86) Internationale Anmeldenummer: PCT/EP2014/050810
(87) Internationale Veröffentlichungsnummer: WO 2014/111473

(56) Entgegenhaltungen:
- EP-A1- 1 319 335
- EP-A1- 2 179 857
- DE-A1- 3 402 871
- DE-A1-102011 103 132
- Johan Bosman: "Processes and strategies for solid state Q-switch laser marking of polymers", thesis, university of Twente, 2007, Seiten 37,38,160-165, XP055065761, ISBN: 978-9-03-652346-2 Gefunden im Internet: URL:http://doc.utwente.nl/58020/1/thesis_B osman.pdf [gefunden am 2013-06-07]
- HEIKO HAUPT: "Auf dem Weg zu einem neuen Mythos? Warum UV-Glas zur Vermeidung von Vogelschlag noch nicht empfohlen werden kann", BERICHTE ZUM VOGELSCHUTZ, Bd. 47/48, 2011, Seiten 143-160, XP055065078,

## Beschreibung

Die Erfindung betrifft zumindest teilweise transparente oder transluzente Kunststoffformteile zur Herstellung von Lärmschutzwänden, Fassadenbauteilen und Verscheibungen, die einen effektiven Vogelschutz gewährleisten.

Im Bereich der Lärmschutzwände, Fassadenbauteile und Verscheibungen mit transparenten oder transluzenten Segmenten ist das Thema Vogelschlag fortlaufend aktuell. Viele Strukturen und Markierungen sind in der Vergangenheit vorgeschlagen worden, um Vögel vom Flug gegen transparente Flächen abzuhalten.

Aus diversen Bereichen ist die Verwendung von Markierungen, die sich durch eine UV-Absorption auszeichnen, bekannt, z.B. dem der ID-Karten, beispielsweise beschrieben in der EP 2 179 857 A1.

Die EP 1 319 335 A1 beispielsweise beschreibt die Markierung transparenter Stoffe durch mechanische, physikalische und/oder chemische Behandlung. Zur Schaffung von Vogelschutzvorrichtungen wird die Ausnutzung der besseren UV-Sichtigkeit von Vögeln vorgeschlagen.

Die DE 10 2011 103 132 A1 beschreibt ein Scheibenelement mit einer Schutzstruktur gegen Vogelschlag, wobei die Schutzstruktur auf mindestens einer Seite des Scheibenelements angeordnet ist und die Schutzstruktur für ein Vogelauge als nicht durchfliegbares Hindernis sichtbar ist, wobei den grafisch gestalteten Beschichtungselementen Lumineszenzpigmente beigemischt sind, die im UV-Bereich absorbieren und mittels Stokes-Verschiebung im länger- oder kürzerwelligen Bereich emittieren.

H. Haupt, Berichte zum Vogelschutz, Band 47/48, 2011, 143 - 160 andererseits weist daraufhin, dass es verfrüht sei, UV-Markierungen als ausreichend effizient zur Verhinderung von Vogelschlag zu bezeichnen.

Jüngere Studien belegen auch, dass das Aufbringen klassischer Greifvogelsilhouetten, das üblicherweise verwendet wird, keine ausreichende Wirkung erzielt.

Es hat sich herausgestellt, dass streifenförmige oder punktuelle Markierungen auf einem transparenten Element den Vogelschlag besser verhindern als die bekannten Greifvogelsilhouetten, wobei diese Markierungen in Form von Klebestreifen nach der Fertigung des transparenten Segments aufgebracht werden. Alternativ hierzu besteht die Möglichkeit durch Siebdruck oder andere schichtbildende Auftragsverfahren Markierungen auf der Oberfläche der transparenten Segmente zu platzieren.

Der Nachteil beider Verfahren zur Aufbringung von Markierungen ist, dass Sie arbeitsintensiv und dadurch mit erheblichen Mehrkosten versehen sind. Des Weiteren zeigen derartige auf die Oberfläche aufgebrachte Modifikationen Verwitterungserscheinungen und Ablösungen nach einigen Jahren im Außeneinsatz und sind somit nicht mehr wirkungsvoll.

Bekannt sind grundsätzlich Verfahren zur Markierung transparenter Bauelemente mittels Laser, etwa beschrieben in der DE 34 02 871 A1 oder auch in J. Bosman, Processes and strategies for solid state Q-switch laser marking of polymers, Doktorarbeit, Enschede, 2007, ISBN 978-9-03-652346-2.

Aufgabe der vorliegenden Erfindung ist es somit, teilweise transparente oder transluzente Kunststoffformteile zur Herstellung von Lärmschutzwänden / Wandelementen, Fassadenbauteilen und Verscheibungen mit verbessertem Schutz vor Vogelschlag bereitzustellen, die eine dauerhaft beständige Markierung aufweisen, wobei die Markierungen eine hohe Detailgenauigkeit besitzen und keine negativen Auswirkungen auf die Schlagzähigkeit des Formteils haben. Die Kunststoffformteile weisen eine hohe Lichttransmission und Farbneutralität bei vorzugsweise geringer Oberflächenreflexion auf und zeichnen sich durch eine ausgezeichnete Schlagfestigkeit aus.

Aufgabe der vorliegenden Erfindung ist es weiterhin, die genannten Polymerzusammensetzungen zur Herstellung der markierten Kunststoffformteile bereitzustellen.

### Die Aufgabe wird durch

### Kunststoffformteile umfassend

a) mindestens eine Substratschicht enthaltend mindestens ein thermoplastisches Polymer, wobei die Substratschicht eine Basisschicht und eine daran angrenzende Coextrusionsschicht umfasst und wobei die Coextrusionsschicht mindestens einen IR-Absorber umfasst,
b) mindestens eine Deckschicht auf mindestens einer Seite der Substratschicht,
c) optional eine Primer oder Zwischenschicht zwischen den Schichten a) und b),
dadurch gekennzeichnet, dass das Kunststoffformteil in der Substratschicht Markierungen aufweist, die in den markierten Bereichen die Transparenz des Formteils im Wellenlängenbereich von 380 bis 780 nm herabsetzen,
und ihre Verwendung zur Herstellung von Vogelschutzverglasungen gelöst.

Dauerhaft im Sinne der vorliegenden Erfindung bedeutet mehr als 10 Jahre, vorzugsweise mehr als 20 Jahre und besonders bevorzugt mehr als 30 Jahre.

Im Sinne der vorliegenden Erfindung bedeutet "sichtbares Licht" den Bereich des Lichts zwischen 380 nm und 780 nm, und der Bereich der "IR-Strahlung" den Bereich des nahen Infrarots (NIR) zwischen 780 nm und 2500 nm, und der Bereich der "UV-Strahlung" den Bereich zwischen 100 nm und 380 nm.

Unter Transparenz versteht man im Sinne der vorliegenden Erfindung, dass man den Hintergrund bei Durchsicht durch das transparente Material, z.B. in Form eines entsprechenden Formkörpers, deutlich erkennen kann. Bloße Lichtdurchlässigkeit wie z.B. bei Milchglas, durch welches der Hintergrund nur unscharf erscheint, genügt nicht, um das entsprechende Material als transparent zu bezeichnen. Transparente thermoplastischen Polymere beziehungsweise die thermoplastischen Polymer-Zusammensetzungen im Sinne der vorliegenden Erfindung weisen ferner eine Anfangstrübung von weniger als 5,0 %, bevorzugt 4,0 %, weiter bevorzugt weniger als 3,0 %, insbesondere bevorzugt weniger als 2,0 % auf. Im Rahmen der vorliegenden Erfindung wird die Trübung, sofern nicht anders angegeben, nach ASTM D 1003 mit einem BYK Gardner Haze Gard bestimmt.

In der vorliegenden Erfindung genannte bevorzugte Ausführungsformen können sowohl einzeln als auch in Kombination miteinander vorliegen.

Die erfindungsgemäßen Kunststoffformteile weisen Markierungen auf, die in den markierten Bereichen die Transparenz des Formteils herabsetzen.

Ein Formteil ist in den nicht markierten Bereichen transparent bei einer Anfangstrübung wie zuvor beschrieben.

Die nicht markierten Bereiche weisen ferner vorzugsweise eine Lichttransmission (Ty) im Bereich von 15 % - 95 %, bevorzugt im Bereich von 20 % - 90 %, besonders bevorzugt im Bereich von 30 % bis 90 % auf. Sofern in der vorliegenden Erfindung nicht anders angegeben, werden die Transmissionsmessungen und Reflexionsmessungen an einem Lambda 900 Spektralphotometer der Firma Perkin Elmer mit Photometerkugel nach ISO 13468-2 durchgeführt (d.h. Bestimmung der Gesamttransmission durch Messung der diffusen Transmission und direkten Transmission). Die Messung der Werte erfolgt über den Wellenlängenbereich von 380 nm bis 780 nm.

In einer besonderen Ausführungsform sind folgende Vorgaben bezüglich der Farbe an einen transparenten Formkörper bevorzugt aus Polycarbonat, PMMA, PS, bevorzugt PC zu erfüllen:
a* = 0 ± 5 und b* = 0 ± 5, bevorzugt a* = 0 ± 4 und b* = 0 ± 4 und insbesondere bevorzugt a* = 0 ± 2 und b* = 0 ± 2

Die Bestimmung der Farbe in Transmission erfolgt mit einem Lambda 900 Spektralphotometer der Firma Perkin Elmer mit Photometerkugel in Anlehnung an ASTM E1348 mit den in der ASTM E308 beschriebenen Gewichtungsfaktoren und Formeln.

Die Berechnung der CIELAB Farbkoordinaten L*, a*, b* erfolgt für Lichtart D 65 und 10° Normalbeobachter.

Der Bedeckungsgrad der Markierungen, d.h. der Teil der Oberfläche des Kunststoffformteils, der nicht mehr transparent im Sinne der o.g. Definition ist, liegt üblicherweise im Bereich von 3 % bis 85 %. Allgemein bevorzugt ist ein Bedeckungsgrad von 2 bis 40 %, weiter bevorzugt von 3 bis 30%, noch weiter bevorzugt von 4 bis 25 %.

Die Markierungen sind vorzugsweise auf der Fläche des Kunststoffformteils gleichmäßig / homogen angeordnet. Unter einer homogenen Verteilung der Markierungen wird in der vorliegenden Erfindung verstanden, dass die Markierungen nicht in einem bestimmten Bereich des transparenten Segmentes gehäuft vorkommen, sondern sich auf dem Segment gleichmäßig verteilen. Auch eine erratische Anordnung der Markierungen ist in einer alternativen Ausführungsform möglich.

Vorzugsweise ist die bei der Anordnung und Form der Markierungen die Bedingung zu erfüllen, dass die Markierungen keine transparenten Flächenelemente freilassen, deren mittlere Durchmesser größer als 250 mm, bevorzugt größer als 200 mm und weiter bevorzugt größer als 150 mm sind.

In einer weiter bevorzugten Ausführungsform sind die Markierungen einfache geometrische Figuren, z.B. Kreise, Ovale, Dreiecke, Vierecke, Fünfecke, Sechsecke und Achtecke.

In einer hierzu alternativen Ausführungsform sind die Markierungen komplexe Figuren, z.B. Vögel, Blumen und unregelmäßige mehrzackige Sterne, vorzugsweise mit 4 - 8 Zacken, Haus-/Städtesilhouetten, oder Schriftzüge.

Die Markierungen, unabhängig von Ihrer Form, weisen vorzugsweise einen mittleren Durchmesser von mindestens 5 mm, weiter bevorzugt von mindestens 10 mm, und besonders bevorzugt von mindestens 20 mm auf. Der maximale mittlere Durchmesser der Markierungen ist vorzugsweise kleiner als 300 mm, weiter bevorzugt kleiner als 250 mm und besonders bevorzugt kleiner als 200 mm

Unter dem mittleren Durchmesser einer beliebigen geometrischen Figur versteht man den Mittelwert aus dem Abstand der beiden am weitesten entfernten Randpunkte und dem Abstand der beiden am geringsten entfernten Randpunkte derselben geometrischen Figur, wobei beide Abstände durch den Schwerpunkt der geometrischen Figur verlaufen.

Die Markierungen können zu Linien oder Linienpaaren angeordnet sein, die wiederum homogen über das transparente Segment verteilt sein können, wobei eine horizontale gegenüber einer vertikalen oder diagonalen Ausrichtung bevorzugt ist.

Bei horizontaler Ausrichtung der linienförmigen Markierungen weisen diese vorzugsweise eine Linienbreite von 1,5 mm bis 15 mm, weiter bevorzugt von 2 mm bis 7 mm und besonders bevorzugt von 3 mm auf, wobei diese wiederum weiter bevorzugt in einem regelmäßigen Abstand von 1,5 cm bis 10 cm, weiter bevorzugt von 2 cm bis 8 cm und besonders bevorzugt von 3cm bis 5 cm zueinander angeordnet sind. Die Breite der Markierungen und Abstände sind bevorzugt derart aufeinander abgestimmt, dass sich allgemein vorzugsweise ein Bedeckungsgrad der Formteiloberfläche von 4 % - 25 %, weiter bevorzugt von 5 % - 15%, und besonders bevorzugt von 5 % - 10 % ergibt.

Bei vertikaler Ausrichtung der linienförmigen Markierungen weisen diese vorzugsweise eine Linienbreite von 3 mm bis 20 mm, weiter bevorzugt von 4 mm bis 8 mm und besonders bevorzugt von 5 mm auf, wobei diese wiederum weiter bevorzugt in einem regelmäßigen Abstand von 4 cm bis 20 cm, weiter bevorzugt von 6 cm bis 15 cm und besonders bevorzugt von 8 cm bis 12 cm zueinander angeordnet sind. Die Breite der Markierungen und Abstände sind bevorzugt derart aufeinander abgestimmt, dass sich vorzugsweise ein Bedeckungsgrad der Formteiloberfläche von 2 % - 25 %, weiter bevorzugt von 3 % - 15%, und besonders bevorzugt von 4 % - 10 % ergibt.

Bei nicht-linienförmigen Markierungen ist der Bedeckungsgrad der Formteiloberfläche vorzugsweise von 5 % - 40 %, weiter bevorzugt von 10 % - 30%, und besonders bevorzugt von 15 % - 25 %, wobei weiter bevorzugt bei einem mittleren Durchmesser der Markierungen bis zu 30 mm der Bedeckungsgrad mindestens 25 % beträgt, und bei einem mittleren Durchmesser der Markierungen von >= 30 mm der Bedeckungsgrad mindestens 15 % beträgt.

Die Markierungen weisen eine Transparenz (Lichttransmission) von weniger als 5,0 %, vorzugsweise weniger als 3,0 %, und besonders bevorzugt von weniger als 1,0 % auf.

Der Kontrast, definiert als Quotient aus der Differenz aus der Lichttransmission einer nicht markierten und einer markierten Stelle als Dividend sowie der Summe aus Lichttransmission der markierten und nichtmarkierten Stelle als Divisor, liegt vorzugsweise bei mindestens 90%, besonders bevorzugt bei 95% und ganz besonders bevorzugt bei 98%.

Die Oberflächenreflexion des Kunststoffformteils (gemessen von 380 nm bis 780 nm) ist vorzugsweise kleiner als 20 %, weiter bevorzugt kleiner als 15 % und noch weiter bevorzugt kleiner als 10% und besonders bevorzugt kleiner als 8%.

Durch die geringe Reflexion wir vermieden, dass sich eine Parklandschaft oder auch ein wolkiger Himmel in der Oberfläche spiegelt, wodurch dem Vogel ein attraktiver Lebensraum bzw. freier Flugraum vorgetäuscht wird und er diesen direkt anfliegt, ohne zu wissen, dass es sich nur um ein Spiegelbild handelt.

Die Markierungen werden über einen Laser in die Substratschicht oder die Deckschicht Kunststoffformteils eingebracht.

Bevorzugt ist der Laser ein Nd:YAG-Laser oder Faserlaser (Fibre Laser) mit 1064 nm Wellenlänge sowie UV (Ultraviolett)-Laser (Nd:YVO₄-Laser) mit 355 nm Wellenlänge.

Die Lasermarkierung des Thermoplasts kann bevorzugt inline während des Extrusionsprozesses erfolgen oder alternativ hierzu auch in einem nachgeschalteten Schritt.

Das erfindungsgemäße Kunststoffformteil umfasst:
a) mindestens eine Substratschicht (Matrix/Basisschicht) enthaltend mindestens ein thermoplastisches Polymer,
b) mindestens eine Deckschicht auf mindestens einer Seite der Substratschicht, z.B. Kratzfestschicht, wie z.B. eine durch CVD (chemical vapor deposition) oder PVD (physical vapor deposition) aufgebrachte Schicht aus SiO₂, Silicaten, Carbiden oder auch Diamant, und/oder eine Antireflexschicht.
c) optional eine Primer oder Zwischenschicht zwischen den Schichten a) und b).

a1) Erfindungsgemäß geeignete, im sichtbaren Bereich transparente thermoplastische Kunststoffe sind beispielsweise Polycarbonat, Copolycarbonat, Polyestercarbonat, Polystyrol, StyrolCopolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona), weiter bevorzugt Polycarbonat, Copolycarbonat, Polyestercarbonat, aromatische Polyester oder Polymethylmethacrylat oder Mischungen der genannten Komponenten, und besonders bevorzugt Polycarbonat und Copolycarbonat.

Auch Mischungen von mehreren transparenten thermoplastischen Polymeren, sofern sie transparent miteinander mischbar sind, sind möglich, wobei eine Mischung aus Polycarbonat mit PMMA (weiter bevorzugt mit PMMA < 2 Gew.-%) oder Polyester bevorzugt ist.

Unter den transparenten thermoplastischen Kunststoffen sind Polymere basierend auf Polymethylmethacrylat (PMMA) und Polycarbonat besonders gut für die Verwendung als Verscheibungsmaterial geeignet. Aufgrund der hohen Zähigkeit besitzt insbesondere Polycarbonat ein sehr gutes Eigenschaftsprofil für derartige Einsatzzwecke.

Das thermoplastische Polymer der Substratschicht a) ist bevorzugt ein Polycarbonat oder PETG, besonders bevorzugt Polycarbonat.

Insbesondere bevorzugt ist ein Polycarbonat mit einer Schmelzvolumenrate von 3 cm³/(10 min) bis 25 cm³/(10 min), bevorzugt 4 bis 18 cm³/(10 min), besonders bevorzugt von 5 bis 10 cm³/(10 min), nach ISO 1133 (bei 300 °C und 1,2 kg Belastung).

Geeignete Polycarbonate für die Herstellung der erfindungsgemäßen Kunststoffzusammensetzung sind alle bekannten Polycarbonate. Dies sind Homopolycarbonate, Copolycarbonate und thermoplastische Polyestercarbonate.

Die geeigneten Polycarbonate haben bevorzugt mittlere Molekulargewichte M̅_{w} von 10.000 bis 50.000 g/mol, vorzugsweise von 14.000 bis 40.000 g/mol und insbesondere von 16.000 bis 32.000 g/mol, und ganz besonders bevorzugt von 24.000 bis 31.000 g/mol ermittelt durch Gelpermeationschromatographie mit Polycarbonateichung.

Die Herstellung der Polycarbonate erfolgt vorzugsweise nach dem Phasengrenzflächenverfahren oder dem Schmelze-Umesterungsverfahren, welche mannigfaltig in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie in den Patentschriften DE-B 10 31 512 und US-B 6 228 973 beschrieben.

Die Polycarbonate werden bevorzugt durch Reaktionen von Bisphenolverbindungen mit Kohlensäureverbindungen, insbesondere Phosgen oder beim Schmelzeumesterungsprozess Diphenylcarbonat bzw. Dimethylcarbonat, dargestellt.

Hierbei sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan besonders bevorzugt.

Diese und weitere Bisphenol- bzw. Diolverbindungen, die sich für die Polycarbonatsynthese einsetzen lassen, sind unter anderem offenbart in WO 2008037364 A1 (s.7, Z. 21 bis s. 10, Z. 5), EP 1 582 549 A1 ([0018] bis [0034]), WO 2002026862 A1 (S. 2, Z. 20 bis S. 5, Z. 14), WO 2005113639 A1 (S. 2, Z.1 bis S. 7, Z. 20).

Die Polycarbonate können linear oder verzweigt sein. Es können auch Mischungen aus verzweigten und unverzweigten Polycarbonaten eingesetzt werden.

Geeignete Verzweiger für Polycarbonate sind aus der Literatur bekannt und beispielsweise beschrieben in den Patentschriften US-B4 185 009 und DE 25 00 092 A1 (erfindungsgemäße 3,3-bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US-B5 367 044 sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Die Herstellung der Polymer-Zusammensetzung für die erfindungsgemäße Substratschicht (Basisschicht) enthaltend die oben genannten und weitere optionale Komponenten erfolgt mit gängigen Einarbeitungsverfahren durch Zusammenführung, Vermischen und Homogenisieren, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Komponenten der erfindungsgemäßen Zusammensetzung durch bekannte Verfahren wie unter anderem als Masterbatch eingebracht werden.

Die Verwendung von Masterbatchen sowie von Pulvermischungen oder kompaktierten Vormischungen ist insbesondere zum Einbringen der in der vorliegenden Erfindung genannten Komponenten geeignet. Hierbei können wahlweise alle vorgenannten Komponenten vorgemischt werden. Alternativ sind aber auch Vormischungen der Komponenten möglich. In allen Fällen werden für eine bessere Dosierbarkeit bei der Herstellung der thermoplastischen Polymer-Zusammensetzungen die vorgenannten Komponenten-Vormischungen bevorzugt mit der pulverförmigen Polymerkomponente so aufgefüllt, dass gut handhabbare Gesamtvolumina entstehen.

In einer besonderen Ausführungsform können die genannten Komponenten zu einem Masterbatch vermischt werden, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, dass die Komponenten besser in der Polymermatrix verteilt werden. Zur Herstellung des Masterbatches wird als Polymermatrix bevorzugt der thermoplastische Kunststoff gewählt, der auch die Hauptkomponente der letztlichen Polymer-Gesamtzusammensetzung darstellt.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Substratschicht a) enthält neben dem thermoplastischen Polymer, das sich zu den übrigen Komponenten zu 100 Gew.-% addiert, mindestens einen IR-Absorber in der Coextrusionsschicht, der auch aus den nachfolgend genannten Verbindungen ausgewählt sein kann, und optional folgende Komponenten, ggf. auch weitere IR-Absorber, wobei die Komponenten unabhängig voneinander kombiniert werden können:
a2) einen oder mehrere anorganischen IR-Absorber aus der Gruppe der Boridverbindungen vom Typ MₓB_{y} (M = La, Ce, Pr, Nd, Tb, Dy, Ho, Y, Sm, Eu, ER, Tm, Yb, Lu, Sr, Ti, Zr, Hf, V, Ta, Cr, Mo, W und Ca), wobei Lanthanhexaborid (LaB₆), Praseodymiumborid (PrB₆), Neodymiumborid (NdB₆), Ceriumborid (CeB₆), Terbiumborid (TbB₆), Dysprosiumborid (DyB₆), Holmiumborid (HoB₆), Yttriumborid (YB₆), Samariumborid (SmB₆), Europiumborid (EuB₆), Erbiumborid (ErB₆), Thuliumborid (TmB₆), Ytterbiumborid (YbB₆), Lutetiumborid (LuB₆), Strontiumborid (SrB₆), Calciumborid (CaB₆), Titaniumborid (TiB₂), Zirconiumborid (ZrB₂), Hafniumborid (HfB₂), Vanadiumborid (VB₂), Tantalumborid (TaB₂), Chromborid (CrB and CrB₂), Molybdänborid (MoB₂, Mo₂B₅ and MoB), Wolframborid (W₂B₅) oder Kombinationen dieser Boride bevorzugt sind. Ganz besonders bevorzugt sind Boride auf Basis von Lanthanhexaborid (LaB₆) oder Mischungen enthaltend Lanthanhexaborid.
   Bevorzugt werden die Boride in einer Menge von 0,00150 Gew.-% - 1,0000 Gew.-%, weiter bevorzugt 0,00200 Gew.-% - 0,80000 Gew.-% und besonders bevorzugt 0,003 Gew.-% - 0,600 Gew.-%, berechnet als Feststoffanteil an Borid in der Polymer-Gesamtzusammensetzung, eingesetzt. Feststoffanteil an Borid meint in diesem Zusammenhang, dass Borid als Reinstoff und nicht eine Suspension oder andere Zubereitung, enthaltend den Reinstoff, eingesetzt wird.
a3) einen oder mehrere anorganische IR-Absorber aus der Gruppe der Wolframverbindungen vom Typ
b1) W_{y}O_{z} (W = Wolfram, O = Sauerstoff; z/y = 2,20 - 2,99) und/oder
b2) MₓW_{y}O_{z} (M = H, He, Alkalimetall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1,000; z/y = 2,2-3,0), wobei als M die Elemente H, Cs, Rb, K, Tl, In, Ba, Li, Ca, Sr, Fe und Sn bevorzugt sind, wobei hiervon Cs ganz besonders bevorzugt ist. Besonders bevorzugt sind Ba_{0,33}WO₃, Tl_{0,33}WO₃, K_{0,33}WO₃, Rb_{0,33}WO₃, Cs_{0,33}WO₃, Na_{0,33}WO₃, Na_{0,75}WO₃, sowie deren Gemische. In einer besonderen Ausführungsform der vorliegenden Erfindung ist die alleinige Verwendung von Cs_{0,33}WO₃ als anorganischem IR-Absorber ganz besonders bevorzugt. Ebenfalls bevorzugt sind Cs/W-Verhältnisse von 0,20 und 0,25, wobei die vorgenannten Wolframverbindungen vom Typ b1) und b2) nachfolgend als Wolframate bezeichnet werden;
   Das IR-absorbierende anorganische Wolframat wird bevorzugt in organischer Matrix dispergiert. Bevorzugt werden die Wolframate in einer Menge von 0,0075 Gew% - 0,0750 Gew.-%, bevorzugt 0,0100 Gew% - 0,0500 Gew.-% und besonders bevorzugt 0,0125 Gew% - 0,0375 Gew.-%, berechnet als Feststoffanteil an Wolframat in der Polymer-Gesamtzusammensetzung, eingesetzt. Feststoffanteil an Wolframat meint in diesem Zusammenhang das Wolframat als Reinstoff und nicht eine Suspension oder andere Zubereitung, enthaltend den Reinstoff.

Bevorzugt werden Zink-dotierte Cäsiumwolframate verwendet, wenn Wolframate allein als IR-Absorber eingesetzt werden.

a4) ein oder mehrere anorganische, nanoskalige Pigmente, vorzugsweise Ruß, insbesondere nanoskaliger Ruß.

Der Ruß liegt bevorzugt fein dispergiert in der organischen Polymermatrix vor und ist bevorzugt nanoskalig. Geeignete Ruße weisen eine durchschnittliche Teilchengröße (ermittelt durch TEM) auf von bevorzugt weniger als 100 Nanometer (nm), weiter bevorzugt weniger als 75 nm, noch weiter bevorzugt weniger als 50 nm und besonders bevorzugt weniger als 40 nm, wobei die durchschnittliche Teilchengröße vorzugsweise größer als 0,5 nm, weiter bevorzugt größer als 1 nm und besonders bevorzugt größer als 5 nm ist.

Im Sinne der Erfindung geeignete Ruße unterscheiden sich von sogenannten Leitrußen dadurch, dass sie nur geringe oder keine elektrische Leitfähigkeit aufweisen. Leitruße weisen im Vergleich zu den hier verwendeten Rußen bestimmte Morphologien und Überstrukturen auf, um eine hohe Leitfähigkeit zu erzielen. Demgegenüber lassen sich die hier verwendeten nanoskaligen Ruße sehr gut in Thermoplasten dispergieren, so dass kaum zusammenhängende Bereiche aus Ruß auftreten, aus denen eine entsprechende Leitfähigkeit resultieren könnte. Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS®, als nass-verarbeitete Pellets unter den Namen ELFTEX®, REGAL® und CSX®, und in einer flockigen Erscheinungsform unter MONARCH®, ELFTEX®, REGAL® und MOGUL® - alle erhältlich von Cabot Corporation.

In einer besonders bevorzugten Ausführungsform weisen die Ruß-Typen Partikelgrößen von 10 nm - 30 nm auf und haben eine Oberfläche von vorzugsweise 35 m² - 138 m² pro g (m²/g). Der Ruß kann behandelt oder unbehandelt sein - so kann der Ruß mit bestimmten Gasen, mit Silica oder organischen Substanzen, wie z.B. Butyllithium behandelt sein. Durch eine derartige Behandlung kann eine Modifizierung oder Funktionalisierung der Oberfläche erreicht werden. Dies kann die Kompatibilität zur entsprechend eingesetzten Matrix fördern. Insbesondere bevorzugt sind Ruße, die unter dem Handelsnamen BLACK PEARLS® (CAS-Nr. 1333-86-4) gehandelt werden.

Der nanoskalige Ruß wird in der erfindungsgemäßen Zusammensetzung bevorzugt in Konzentrationen von 0,00080 Gew.-% - 0,03500 Gew.-%, insbesondere bevorzugt von 0,00090 Gew.-% - 0,03000 Gew.-% und ganz besonders bevorzugt in Konzentrationen von 0,00100 Gew.-% bis 0,02000 Gew-% (bezogen auf die Gesamtzusammensetzung) eingesetzt.
a5) einen oder mehrere organische Infrarot (IR)-Absorber wie z.B. in M. Matsuoka, Infrared Absorbing Dyes, Plenum Press, New York, 1990 beschrieben. Besonders geeignet sind Infrarot-Absorber aus den Klassen der Phthalocyanine, der Naphthalocyanine, der Metallkomplexe, der Azofarbstoffe, der Anthraquinone, der Quadratsäurederivate, der Immoniumfarbstoffe, der Perylene, der Quaterylene sowie der Polymethine. Davon sind ganz besonders Phthalocyanine und Naphthalocyanine geeignet.
   Aufgrund der verbesserten Löslichkeit in Thermoplasten sind Phthalocyanine und Naphthalocyanine mit sterisch anspruchsvollen Seitengruppen vorzuziehen, wie beispielsweise Phenyl, Phenoxy, Alkylphenyl, Alkylphenoxy, tert-Butyl, (-S-Phenyl), -NH-Aryl, -NH-Alkyl und ähnliche Gruppen.
a6) ein oder mehrere Entformungsmittel auf Basis eines Fettsäureesters, bevorzugt eines Stearinsäureesters, insbesondere bevorzugt auf Pentaerythritbasis.
   In einer besonderen Ausführungsform werden Pentaerythrittetrastearat (PETS) und/oder Glycerinmonostearat (GMS) eingesetzt.
   Es werden 0,01 Gew.-% bis 1,0 Gew.-%, bevorzugt 0,01 Gew.-% bis 0,50 Gew.-%, besonders bevorzugt 0,05 Gew.-% bis 0,40 Gew.-% ein oder mehrere Entformer eingesetzt.
a7) einen oder mehrere Thermostabilisatoren. Bevorzugt geeignet sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di-cumylphenyl)pentaerythritoldiphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristea-rylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos® 168 (Tris(2,4-di-tert-butyl-phenyl)-phosphit) und Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt.

In einer speziellen Ausführungsform der vorliegenden Erfindung werden die erfindungsgemäßen Phosphinverbindungen gemeinsam mit einem Phosphit oder einem phenolischen Antioxidans oder einer Mischung aus den beiden letztgenannten Verbindungen eingesetzt.

Die Thermostabilisatoren werden in Mengen von 0,00 Gew.-%- 0,20 Gew.-%, bevorzugt 0,01 Gew.-% - 0,10 Gew.-%, weiter bevorzugt von 0,01 Gew.-% bis 0,05 Gew.-%, und besonders bevorzugt von 0,015 Gew.-% bis 0,040 Gew.-% eingesetzt.

a8) einen oder mehrere Verarbeitungstabilisatoren auf Phosphatbasis. Das Phosphat hat dabei bevorzugt die folgende Struktur (8) 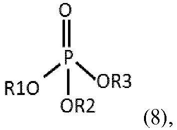 wobei R1 bis R3 H, gleiche oder unterschiedliche lineare, verzweigte oder zyklische Alkylreste sein können. Besonders bevorzugt sind C₁-C₁₃-Alkylreste. C₁-C₁₈-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Erfindungsgemäß geeignete Alkylphosphate sind z. B. Mono-, Di- und Trihexylphosphat, Triisoctylphosphat und Trinonylphosphat. Bevorzugt wird als Alkylphosphat Triisooctylphosphat (Tris-2-ethyl-hexyl-phosphat) verwendet. Es können auch Mischungen aus verschiedenen Mono-, Di- und Trialkylphosphaten verwendet werden.

Die verwendeten Verarbeitungsstabilisatoren werden in Mengen von weniger als 0,0500 Gew.-%, bevorzugt von 0,00005 Gew.-% bis 0,05000 Gew.-%, besonders bevorzugt 0,0002 bis 0,0500 Gew.-%, ganz besonders bevorzugt von 0,0005 Gew.-% bis 0,0300 Gew.-% und in einem sehr bevorzugtem Fall von 0,001 Gew.-% bis 0,0120 Gew.-%, bezogen auf das Gesamtgewicht der Zusammensetzung, eingesetzt.

a9) einen oder mehrere UV (Ultraviolett)-Absorber in einem Anteil von 0,0 Gew.-% bis 20,00 Gew.-%, bevorzugt von 0,05 Gew.-% bis 10,00 Gew.-%, weiter bevorzugt von 0,10 Gew.-% bis 7,00 Gew.-%, noch weiter bevorzugt 0,10 Gew.-% bis 0,50 Gew.-% sowie ganz besonders bevorzugt 0,10 Gew.-% bis 0,30 Gew.-% mindestens ein oder mehrere UV-Absorber bezogen auf das Gesamtgewicht der Zusammensetzung;

Geeignete UV-Absorber sind beispielsweise beschrieben in der EP 1 308 084 A1, in der DE 102007011069 A1 sowie in der DE 10311063 A1; Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, BASF AG Ludwigshafen), 2-(2'-Hydroxy-5'-(tert.-octyl)-phenyl)-benzotriazol (Tinuvin® 329, BASF AG Ludwigshafen), 2-(2'-Hydroxy-3'-(2-butyl)-5'-(tert.butyl)-phenyl)-benzotriazol (Tinuvin® 350, BASF AG Ludwigshafen), Bis-(3-(2H-benztriazolyl)-2-hydroxy-5-tert.-octyl)methan (Tinuvin® 360, BASF AG Ludwigshafen), (2-(4,6-diphenyl-1,3,5-triazin-2-yl)-5-(hexyloxy)-phenol (Tinuvin® 1577, BASF AG Ludwigshafen), sowie der Benzophenone 2,4-Dihydroxy-benzophenon (Chimasorb® 22, BASF AG Ludwigshafen) und 2-Hydroxy-4-(octyloxy)-benzophenon (Chimassorb® 81, BASF AG Ludwigshafen), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul® 3030, BASF AG Ludwigshafen), 2-[2-hydroxy-4-(2-ethylhexyl)oxy]phenyl-4,6-di(4-phenyl)phenyl-1,3,5-triazine (CGX UVA 006 (Tinuvin® 1600), BASF AG, Ludwigshafen) oder Tetra-ethyl-2,2'-(1,4-phenylene-dimethylidene)-bismalonate (Hostavin® B-Cap, Clariant AG). Es können auch Mischungen dieser Ultraviolett-Absorber eingesetzt werden.

a10) ein oder mehrere Farbmittel oder Pigmente, z.B. Schwefel-haltige Pigmente wie Cadmium Red and Cadmium Gelb, Eisencyanid basierte Pigmente wie Berliner Blau, Oxid-Pigmente wie Titandioxid, Zinkoxid, rotes Eisenoxid, schwarzes Eisenoxid, Chromoxid, Titangelb, Zink-Eisen basiertes Braun, Titan-Cobalt basiertes Grün, Cobaltblau, Kupfer-Chrom basiertes Schwarz und Kupfer-Eisen basiertes Schwarz oder Chrom-basierte Pigmente wie Chromgelb, Phthalocyaninabgeleitete Farbstoffe wie Kupfer-Phthalocyanin Blau and Kupfer Phthalocyanin Grün, kondensierte polycyclische Farbstoffe und Pigmente wie Azo-basierende (z.B. Nickel-Azogelb), Schwefel-Indigo-Farbstoffe, Perynon-basierte, Perylene-basierte, Chinacridon-abgeleitete, Dioxazin-basierte, Isoindolinon-basierte und Chinophthalon-abgeleitete Derivate, Anthrachinonbasierte, heterocyclische Systeme.

Konkrete Beispiele für Handelsprodukte sind z.B. MACROLEX® Blau RR, MACROLEX® Violett 3R, MACROLEX® Violett B (Lanxess AG, Deutschland), Sumiplast® Violett RR, Sumiplast® Violett B, Sumiplast® Blau OR, (Sumitomo Chemical Co., Ltd.), Diaresin® Violett D, Diaresin® Blau G, Diaresin® Blau N (Mitsubishi Chemical Corporation), Heliogen® Blau oder Heliogen® Grün (BASF AG, Deutschland).

Von diesen sind Cyaninderivate, Chinolinderivate, Anthrachinonderivate, Phthalocyaninderivate bevorzugt.

a11) Optional enthält die Basisschicht 0,0 Gew.-% bis 5,0 Gew.-%, bevorzugt 0,01 Gew.-% bis 1,00 Gew.-% mindestens eines weiteren Additivs verschieden von a2) - a10). Bei den weiteren Additiven handelt es sich um übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschrieben sind wie z.B. Flammschutzmittel, Antistatika oder Fließverbesserer. Die bereits genannten Komponenten der Basisschicht sind in diesem Zusammenhang ausdrücklich ausgenommen.

In einer bevorzugten Ausführungsform enthält die Basisschicht mindestens ein IR-Strahlung absorbierendes Additiv, bevorzugt ausgewählt aus der Gruppe, die die Komponenten a2, a3, a4, a5 umfasst, und weiter bevorzugt einen UV-Absorber, vorzugsweise ausgewählt aus den UV-Absorbern der Gruppe a9. Diese Additive können im folgenden auch "Laser-Absorber" genannt werden, wobei als bevorzugt die Additive a2 bis a5, besonders bevorzugt a2 bis a4, ganz besonders bevorzugt a2 und a3 als IR-Absorber verwendet werden.

In einer weiter bevorzugten Ausführungsform enthält die Basisschicht mindestens einen Laser-Absorber und mindestens eine weitere Komponente ausgewählt aus der Gruppe, die Entformungsmittel, UV-Absorber, Verarbeitungsstabilisatoren und Thermostabilisatoren, weiter bevorzugt mindestens einen UV-Absorber und einen Thermostabilisator und/oder Verarbeitungsstabilisator, umfasst.

In einer noch weiter bevorzugten Ausführungsform enthält die Basisschicht einen Laser-Absorber der Komponenten a2 bis a5, einen UV-Absorber und ein Entformungsmittel.

Bevorzugt werden als IR-Absorber / Laser-Absorber Lanthanboride, weiter bevorzugt Lanthanhexaborid, besonders bevorzugt in (in Konzentrationen von 0,005 bis 0,500 Gew.-% (bezogen auf das Gesamtgewicht der Zusammensetzung), sowie Ruß, besonders bevorzugt in Konzentrationen von 10 ppm bis 100 ppm eingesetzt.

Grundsätzlich kann eine Modifikation der Matrix des gesamten transparenten Segmentes, d.h. der gesamten Substratschicht, erfolgen. Erfindungsgemäß erfolgt die Modifikation mit einem IR- und mit einem UV-Absorber in einer oberflächennahen Schicht erfolgen (z.B. hergestellt durch Coextrusion, Lamination, oder Mehrkomponentenspritzguss). Hierdurch kann die Abbildbarkeit und Detailgenauigkeit der Markierung deutlich erhöht werden. Darüber hinaus wird durch die Additivierung einer dünnen oberflächennahen Schicht die Farbneutralität der transparenten Segmente gewährleistet.

Die Konzentration der Laser-Absorber liegt auch in diesen oberflächennahen Schichten in den oben genannten Bereichen.

Die vorliegenden Fertigteile weisen vorzugsweise Dicken von 12 mm - 20 mm, weiter bevorzugt 14 - 19 mm, und besonders bevorzugt von 15 mm - 18 mm, auf.

Das Aufbringen der Deckschicht kann zugleich oder unmittelbar nach der Formgebung des Grundkörpers (Substratschicht) geschehen, z.B. durch Coextrusion oder Mehrkomponentenspritzguss. Das Aufbringen kann aber auch auf den fertig geformten Grundkörper geschehen, z.B. durch Lamination mit einem Film oder einer Folie oder durch Beschichtung mit einer Lösung.

Platten aus Basis- und Deckschicht / Deckschichten werden jedoch bevorzugt durch (Co)extrusion hergestellt.

Zur Extrusion wird die gegebenenfalls z.B. mittels Trocknung vorbehandelte Polymer-Zusammensetzung dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion der Polymer-Zusammensetzung notwendigen Temperaturen eingestellt, wobei üblicherweise den Herstellerangaben gefolgt werden kann. Enthalten die Polymerzusammensetzungen beispielsweise Polycarbonate mit hoher Schmelzeviskosität, so werden diese normalerweise bei Schmelzetemperaturen von 260 °C bis 350 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Coextrusion siehe beispielsweise EP-A 0 110 221, EP-A 0 110 238 und EP-A 0 716 919, für Details des Adapter- und Düsenverfahrens siehe Johannaber/Ast:"Kunststoff- Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Erfindungsgemäß bevorzugte Erzeugnisse oder Formkörper sind Platten, Folien und Verscheibungen. Dabei können neben Massivplatten auch Doppelstegplatten oder Multistegplatten verwendet werden.

Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein. Beispielsweise können Verscheibungen Dichtungsmaterialen am Rand der Verscheibungen aufweisen. Bedachungen können beispielsweise Metallkomponenten wie Schrauben, Metallstifte oder ähnliches aufweisen, die zur Befestigung oder Führung (bei Falt- oder Schiebedächern) der Bedachungselemente dienen können.

Ferner können weitere Materialien mit den erfindungsgemäßen Zusammensetzungen verbunden werden, z.B. im 2-Komponenten-Spritzguss. So kann das entsprechende Kunststoffformteil mit IRabsorbierenden Eigenschaften mit einem Rand versehen werden, welcher z.B. dem Verkleben dient.

In einer besonderen Ausführungsform werden die Artikel aus der Zusammensetzung der vorliegenden Erfindung beschichtet. Diese Beschichtung dient dem Schutz des thermoplastischen Materials gegenüber allgemeinen Witterungseinflüssen (z.B. Schädigung durch Sonnenlicht) sowie gegenüber mechanischer Beeinträchtigung der Oberfläche (z.B. Verkratzen) und erhöht somit die Beständigkeit der entsprechend ausgerüsteten Artikel.

Es ist bekannt, dass Polycarbonat gegenüber UV-Strahlung mittels verschiedener Beschichtungen geschützt werden kann. Üblicherweise enthalten diese Beschichtungen UV-Absorber. Diese Schichten erhöhen ebenso die Kratzfestigkeit des entsprechenden Artikels. Die Artikel aus der vorliegenden Erfindung können Einschicht- oder Mehrschichtsysteme tragen. Sie können ein- oder beidseitig beschichtet sein. In einer bevorzugten Ausführungsform enthält der Artikel einen Kratzfestlack enthaltend UV-Absorber. In einer besonderen Ausführungsform enthält das Mehrschichterzeugnis mindestens eine Schicht enthaltend die erfindungsgemäße Zusammensetzung, mindestens eine UV-Schutzschicht und optional eine Kratzfestbeschichtung.

Der UV-Absorber in der Deckschicht kann dabei ein UV-Absorber ausgewählt aus der Gruppe der unter a9) genannten, bevorzugt mit mindestens einem UV-Absorber aus der Klasse der Benzophenone, insbesondere bevorzugt 4,6-Dibenzoyl-2-(3-triethoxysilylpropyl)resorcin, sein.

Bevorzugt sind UV-Absorber in der Deckschicht und in der Primerschicht enthalten - in der Basisschicht ist die Anwesenheit des UV-Absorbers dagegen optional.

Die Konzentration des UV-Absorbers oder des UV-Absorbergemischs in der Deckschicht liegt zwischen 1 und 30 Gew.-% bevorzugt zwischen 5 Gew.-% und 20 Gew.-%.

Bei Verscheibungsmaterialien ist vorzugsweise auf jeder Seite des Kunststoffformteils mindestens eine Kratzfest- bzw. Antireflexbeschichtung auf mindestens einer Seite angeordnet.

Die Herstellung der Beschichtung, z.B. einer Anti-Reflexbeschichtung, kann über verschiedene Methoden erfolgen. Beispielsweise kann über verschiedene Methoden des Aufdampfens, z.B. über Elektronenstrahlverfahren, Widerstandserhitzung sowie über Plasmaabscheidung oder verschiedene Sputtermethoden wie Hochfrequenz-Sputtern, Magnetron-Sputtern, Ionenstrahl-Sputtern usw., Ionenplattieren mittels DC-, RF-, HCD-Methoden, Reaktiv-Ionenplattieren usw. oder chemischer Gasphasenabscheidung eine Beschichtung erfolgen. Ferner kann eine Antireflexbeschichtung auch aus Lösung aufgebracht werden. So kann über eine Dispersion eines Metalloxids mit hohen Brechungsindex wie ZrO₂, TiO₂ Sb₂O₅ oder WO₃ in einen Silicon-basierten Lack eine entsprechende Beschichtungslösung hergestellt werden, welche zur Beschichtung von Kunststoffartikeln geeignet ist und thermisch oder UV-gestützt ausgehärtet werden kann.

Es sind verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können beispielsweise über Tauchverfahren, Spincoating, Sprühverfahren, oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma (CVD/PVD).

Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, bevorzugt Biphenyl-Triazine, vorhanden sein. Ferner können IR-Absorber organischer oder anorganischer Natur enthalten sein. Diese Additive können im Kratzfestlack selbst oder in der Primerschicht enthalten sein.

Die Dicke der Kratzfestschicht beträgt 1 - 20 µm, bevorzugt 2 - 15 µm. Unterhalb von 1 µm ist die Beständigkeit der Kratzfestschicht ungenügend. Oberhalb von 20 µm treten häufiger Risse im Lack auf.

Das erfindungsgemäße Basismaterial, welches in der vorliegenden Erfindung beschrieben wird, wird bevorzugt nach Fertigstellung des Halbzeugs mit einer oben beschriebenen Kratzfest- und/oder Antireflexschicht versehen.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 130 °C eingesetzt - häufig nachdem ein Großteil des Lösemittels kurzzeitig bei Raumtemperatur entfernt wurde. Kommerziell erhältliche Systeme sind z.B. SHP470, SHP470FT2050 und SHP401 der Firma Momentive Performance Materials. Derartige Beschichtungen sind z.B. in US 6350512 B1, US 5869185, EP 1308084, WO 2006/108520 beschrieben.

Kratzfest-Lacke (Hard-Coat) sind bevorzugt aus Siloxanen aufgebaut und enthalten bevorzugt UV-Absorber. Sie werden bevorzugt über Tauch- oder Flutverfahren aufgebracht. Die Aushärtung erfolgt bei Temperaturen von 50 °C - 130 °C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylakoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden Diese sind z.B. in EP0570165 oder WO 2008/071363 oder DE 2804283 beschrieben. Kommerziell erhältlich Hybrid-Systeme sind z.B. unter den Namen PHC587, PHC587B, PHC587C sowie UVHC 3000, UVHC 7000 und UVHC 7800 von Momentive Performance Materials erhältlich.

In einem besonders bevorzugten Verfahren erfolgt die Applikation des Lackes über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen.

Hierbei können die Bauteile, sowohl hängend als auch in einem entsprechenden Warenträger gelagert, beschichtet werden.

Bei größeren und/oder 3D-Bauteilen wird das zu beschichtende Teil in einen geeigneten Warenträger eingehangen oder aufgesetzt.

Bei Kleinteilen kann die Beschichtung auch per Hand durchgeführt werden. Hierbei wird die zu beschichtende flüssige Primer- oder Lacklösung ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

Die Dicke der Primerschicht beträgt vorzugsweise 0,05 bis 8 µm, insbesondere bevorzugt 0,1 bis 4,0 µm.

Die Dicke der Deckschicht beträgt vorzugsweise von 1 bis 20 µm, insbesondere bevorzugt von 4,0 bis 12,0 µm.

In einer bevorzugten Ausführungsform ist mindestens eine auf der Basisschicht angeordnete haftvermittelnde Schicht (Primerschicht) zwischen der Basisschicht und der Deckschicht angeordnet.

In einer noch weiter bevorzugten Ausführungsform ist auf beiden Seiten der Basisschicht eine haftvermittelnde Schicht sowie eine Deckschicht aufgetragen.

In einer weiteren bevorzugten Ausführungsform ist die Deckschicht b) eine Beschichtung auf Polysiloxanbasis oder Polyacrylatbasis oder Polyurethanacrylatbasis, bevorzugt auf Polysiloxanbasis, enthaltend
i. mindestens einen UV-Absorber,
   wobei
ii. die Dicke der Deckschicht von 2 bis 15 µm, insbesondere bevorzugt von 4,0 bis 12,0 µm, beträgt.

In einer alternativen Ausführungsform ist ein Laser-Absorber in einer Primer- oder Deckschicht enthalten, so dass diese bei der Markierung stärker geschwärzt wird, ohne die Substratschicht zu schädigen und zu schwächen. Die guten mechanischen Eigenschaften des Substratmaterials bleiben so erhalten.

Erfindungsgemäß ist ein IR-Absorber in einer coextrudierten oberflächennahen Schicht angeordnet, so dass schärfere Konturen erzeugt werden können. Die oberflächennahe Schicht kann dabei eine Schicht der Substratschicht sein. In einer weiter bevorzugten Ausführungsform sind mehrere coextrudierte Schichten übereinanderliegend angeordnet, so dass sie die Substratschicht bilden, wobei vorzugsweise Schichten mit hohem IR- und/oder UV-Absorbergehalt oberflächennah und weiter bevorzugt seitensymmetrisch angeordnet sind.

### Beispiele

Im Folgenden wird die Erfindung anhand von Ausführungsbeispielen und Vergleichsbeispielen 1 bis 7 näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

Materialien zur Herstellung der Probekörper:

### Komponente A)

Lineares Bisphenol-A-Polycarbonat mit Endgruppen basierend auf Phenol mit einer Schmelze-Volumenrate (MVR) von 6 cm³/10 min, gemessen bei 300 °C und 1,2 kg Belastung gemäß ISO 1033, nachfolgend als PC 1 bezeichnet.

Lineares Bisphenol-A-Polycarbonat mit Endgruppen basierend auf Phenol mit einer Schmelze-Volumenrate (MVR) von 10 cm³/10 min, gemessen bei 300 °C und 1,2 kg Belastung gemäß ISO 1033, nachfolgend als PC 3 bezeichnet.

PC 3 enthält noch eine Additivmischung bestehend aus Entformungsmittel, Thermostabilisator und UV-Stabilisator. Als Entformungsmittel wird Pentaerythrittetrastearat (CAS 115-83-3), als Thermostabilisator Triphenylphosphin (CAS 603-35-0) und als UV-Stabilisator Tinuvin® 360 (CAS 103597-45-1) eingesetzt.

### Komponente B)

B1) Black Pearls® 800
   Nanoskaliger Ruß (Partikelgröße ca. 17nm) der Firma Cabot Corp. (CAS-No. 1333-86-4)
B2) Quarterrylen-Farbstoff (Lumogen IR-765 der Firma BASF SE, Deutschland, Cas.Nr. 943969-69-5)
B3) Antimon-Zinnoxid (FMDS 874 der Firma Firma Sumitomo Metal Mining, Japan, Cas.Nr. 953384-75-3)
B4) Cäsiumwolframat, Cs_{0,33}WO₃, (YMDS 874 der Firma Sumitomo Metal Mining, Japan, Cas.Nr. 1258269-41-8)
   Das Produkt liegt in Form einer Dispersion vor. Die Gewichtsangaben in den Beispielen beziehen sich auf das Cäsiumwolframat als Reinstoff, wobei der Feststoffgehalt an Cäsiumwolframat in der eingesetzten kommerziellen YMDS 874-Dispersion 20 Gew% beträgt. Das vorliegende Wolframat ist nicht Zink-stabilisiert.
B5) Lanthanhexaborid, LaB₆ (KHDS 872G2 der Firma Sumitomo Metal Mining, Japan, CAS-No. 949005-03-2)
   Das Produkt liegt in Form einer pulverförmigen Dispersion vor. Die Gewichtsangaben in den Beispielen beziehen sich auf das Produkt KHDS 872G2, wobei der Feststoffgehalt an Lanthanhexaborid in der eingesetzten kommerziellen KHDS 872G2 Dispersion 10,0 Gew.-% beträgt.

Folgende Polymerzusammensetzungen (nachfolgend als Gemische bezeichnet) wurden hergestellt:

| Gemisch No. | PC1 | PC3 | Komponente B | Gehalt an Komponente B |
|---|---|---|---|---|
| 1 | 100,0000 | - | - | - |
| 2 | 100,0000 | - | - | - |
| 3 | 99,9950 | - | B1 | 0,0050 |
| 4 | 99,9995 | - | B2 | 0,0005 |
| 5 | 99,9800 | - | B3 | 0,0200 |
| 6 | 99,9900 | - | B4 | 0,0100 |
| 7 | 99,9700 | - | B4 | 0,0300 |
| 8 | 99,9950 | - | B5 | 0,0050 |
| 9 | 99,9900 | - | B5 | 0,0100 |
| 10 | - | 99,9930 | B1 | 0,0070 |
| 11 | - | 99,9700 | B5 | 0,0300 |

| | | | | |
|---|---|---|---|---|
| * Angaben in Gew.-% | | | | |

Herstellung der Polymerzusammensetzungen durch Compoundierung:
Die Compoundierung der Additive erfolgte auf einem Zweiwellenextruder der Firma KraussMaffei Berstorff, TYP ZE25, bei einer Gehäusetemperatur von 300°C bzw. einer Massetemperatur von 318°C und einer Drehzahl von 100 Upm bei einem Durchsatz von 10 kg/h mit der in der vorstehenden Tabelle angegebenen Mengen an Komponenten. Hierbei wird zunächst zur besseren Vermischung eine Mischung aus einer Teilmenge von PC 1 sowie der jeweiligen Komponente B (5 Gew.-% Mischung bezogen auf die Gesamtzusammensetzung) gefertigt. Diese Mischung wird bei der Compoundierung zur Restmenge PC 1 zu dosiert.

### Herstellung der Prüfkörper:

Das jeweilige Granulat der Gemische 1 bis 9 wird bei 120 °C für 4 Stunden im Vakuum getrocknet und anschließend auf einer Spritzgussmaschine vom Typ Arburg 370 mit einer Spritzeinheit bei einer Massetemperatur von 300°C und einer Werkzeugtemperatur von 90 °C zu Farbmusterplatten mit den folgenden Abmessungen verarbeitet:
- 60 mm x 60 mm x 1 mm
- 60 mm x 60 mm x 2 mm
- 50 mm x 75 mm x 4 mm

### Herstellung dünner Folien aus den Farbmusterplatten:

Farbmusterplatten bestehend aus Granulat aus den Gemischen 1, 3 bis 9 der Maße 60 mm x 60 mm x 1 mm wurden auf einer Präzisions-Hydraulikpresse PW20 der Fa. Paul-Otto Weber GmbH aus Remshalden zu flachen, ca. 100 µm dicken Folien heruntergepresst. Hierfür wurden die 1 mm dicken Platten für 5 Minuten durch Anliegen der auf 320°C bis 340°C temperierten Druckplatten plastifiziert. Nach der Plastifizierzeit wurden die Proben mit einer Schließkraft von 100 bis 200kN zu einer ca. 100 µm dicken Folie geformt. Vor der Entnahme der Folien aus der Presse erfolgte eine Abkühlung der Folien auf ca. 100°C bis 130°C in der Presse bei konstanter Schließkraft von 100 bis 200 kN.

Herstellung von Verbünden aus Folien und Farbmusterplatten enthaltend Granulat aus Gemisch 1
Folien enthaltend Granulat aus Gemischen 3 bis 9 wurden nachfolgend mit Farbmusterplatten enthaltend Granulat aus Gemisch 1 auf einer Präzisions-Hydraulikpresse PW20 der Fa. Paul-Otto Weber GmbH aus Remshalden zu einem festen Verbund der Größe 50 mm x 75 mm x 4 mm zusammengefügt. Hierfür wurden die Kombinationen aus Platte und Folie für 5 Minuten durch Anliegen der Druckplatten (Temperatur der oberen Platte 160°C; Temperatur der unteren Platte 150°C) plastifiziert. Nach der Plastifizierzeit wurden die Kombinationen mit einer Schließkraft von 50kN für 2 Minuten zu einem dauerhaften Verbund gefügt.

| Verbundbezeichnung | Folie (Granulat aus Gemisch) | Platte (Granulat aus Gemisch) |
|---|---|---|
| 3-A | 3 | 1 |
| 4-A | 4 | 1 |
| 5-A | 5 | 1 |
| 6-A | 6 | 1 |
| 7-A | 7 | 1 |
| 8-A | 8 | 1 |
| 9-A | 9 | 1 |

Lasermarkierung von Farbmusterplatten und Verbünden

### (Laserbeschriftungssystem von ACI Laser GmbH)

Für die nachfolgenden Markierungsversuche wurde ein Laserbeschriftungssystem der Firma ACI Laser GmbH bestehend aus einer Workstation COMFORT mit DPL Genesis Marker 163 (8W) und der Beschriftungssoftware MagicMarkV3 verwendet. Die Laserstrahlquelle besteht aus einer Anregungsquelle (Laserdiode) gefolgt von einem Linsensystem sowie einem Resonator basierend auf einem Nd:YAG (Neodym dotierter Yttrium Aluminium Granat) Laserkristall zur Strahlerzeugung. Der resultierende Laserstrahl weist eine Wellenlänge von 1064 nm auf und wird über eine Strahlablenkeinheit nach dem Durchgang durch eine F-Theta Optik 100 auf die Farbmusterplatten bzw. Verbünde fokussiert.

Durch Variation der Frequenz sowie der Vorschubgeschwindigkeit des Lasers bei konstanter Pulsbreite (3µs) wurde das Prozessfenster des Lasers / der Lasermarkierung variiert.

Das Prozessfenster wurde daraufhin derart gewählt, das sich bei Farbmusterplatten bestehend aus Granulat aus Gemischen 3 bis 9 eine flächige und in Abhängigkeit der Additivierung der Matrix der Farbmusterplatte dunkle Markierung bei dem Verfahren ergibt. Werden unter diesen speziellen Bedingungen Farbmusterplatten bestehend aus Granulat aus Gemischen 1 oder 2 beansprucht, so ist nahezu keine Markierung visuell erkennbar.

### 1. Versuchsreihe

Ein Raster von 8 x 8 Markierungen wurde auf einer Farbmusterplatte bei konstanter Pulsbreite (3µs) aufgebracht.
Frequenz auf der Ordinate: 5,0; 7,0; 9,0; 11,0; 13,0; 15,0; 17,0; 19,0 [kHz]
Vorschubgeschwindigkeit auf der Abszisse: 500; 600; 700; 800; 900; 1000; 1500; 2000 [mm/s]

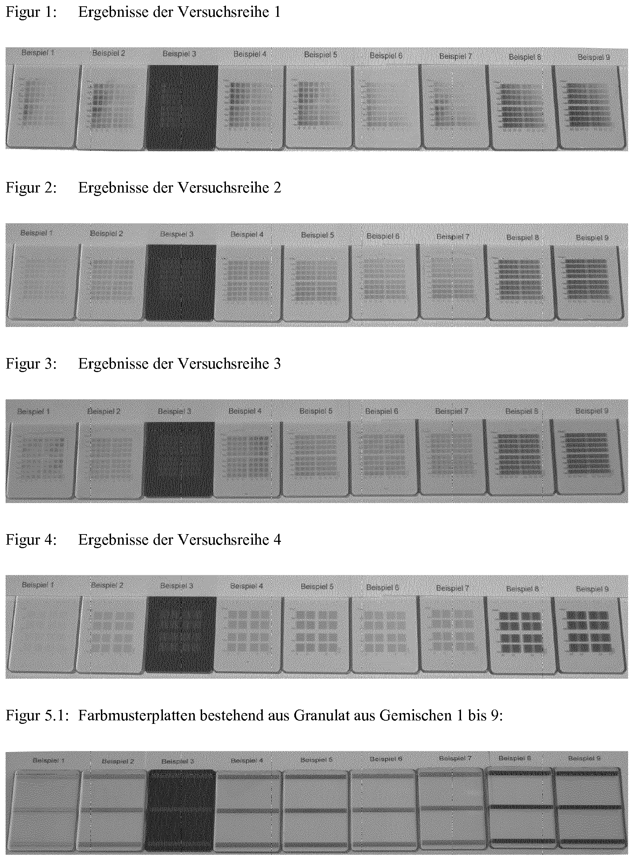

Einen Eindruck über die Ergebnisse der Versuchsreihe 1 zeigt Figur 1.

### 2. Versuchsreihe

Ein Raster von 8 x 8 Markierungen wurde auf einer Farbmusterplatte bei konstanter Pulsbreite (3µs) aufgebracht.
Frequenz auf der Ordinate: 3,0; 4,0; 5,0; 6,0; 7,0; 8,0; 9,0; 10,0 [kHz]
Vorschubgeschwindigkeit auf der Abszisse: 700; 750; 800; 850; 900; 950; 1000; 1050 [mm/s]

Einen Eindruck über die Ergebnisse der Versuchsreihe 2 zeigt Figur 2.

### 3. Versuchsreihe

Ein Raster von 8 x 8 Markierungen wurde auf einer Farbmusterplatte bei konstanter Pulsbreite (3µs) aufgebracht.
Frequenz auf der Ordinate: 7,0; 7,5; 8,0; 8,5; 9,0; 9,5; 10,0; 10,5 [kHz]
Vorschubgeschwindigkeit auf der Abszisse: 700; 725; 750; 775; 800; 825; 850; 875 [mm/s]

Einen Eindruck über die Ergebnisse der Versuchsreihe 3 zeigt Figur 3.

### 4. Versuchsreihe

Ein Raster von 4 x 4 Markierungen wurde auf einer Farbmusterplatte bei konstanter Pulsbreite (3µs) aufgebracht.
Frequenz auf der Ordinate: 7,0; 7,5; 8,0; 8,5 [kHz]
Vorschubgeschwindigkeit auf der Abszisse: 700; 725; 750; 775 [mm/s]

Einen Eindruck über die Ergebnisse der Versuchsreihe 4 zeigt Figur 4.

Aus den Versuchsreihen 1 bis 4 geht hervor, dass durch die Zuschlagstoffe in den Farbmusterplättchen bestehend aus Granulat aus den Gemischen 3 bis 9 (als Beispiel 3 bis 9 in den Figuren bezeichnet) eine bessere Markierung möglich ist, als bei Farbmusterplättchen bestehend aus Granulat aus den Gemischen 1 und 2 (als Beispiel 1 und 2 in den Figuren bezeichnet) ohne Zuschlagstoffe. Unter den gegebenen Prozessbedingungen resultieren Farbmusterplättchen bestehend aus Granulat aus den Gemischen 3, 8 und 9 am kontraststärksten.

### 5. Versuchsreihe

Ein Ensemble von 3 linienförmigen Markierungen wurde in einer Breite von 3 mm und einem Abstand von 3 cm auf Farbmusterplatten und Verbünden (50 mm x 75 mm x 4 mm) bei konstanter Pulsbreite (3µs) aufgebracht.
Frequenz: 8,0 [kHz]
Vorschubgeschwindigkeit: 725 [mm/s]

Figur 5.1 zeigt einen Eindruck über die Ergebnisse von Farbmusterplatten bestehend aus Granulat aus Gemischen 1 bis 9.

Aus den Versuchsreihe 5.1 geht hervor, dass durch die Zuschlagstoffe in den Farbmusterplättchen bestehend aus Granulat aus den Gemischen 3 bis 9 (als Beispiel 3 bis 9 in den Figuren bezeichnet) eine bessere Markierung möglich ist als bei Farbmusterplättchen bestehend aus Granulat aus den Gemischen 1 und 2 (als Beispiel 1 und 2 in den Figuren bezeichnet) ohne Zuschlagstoffe. Unter den gegebenen Prozessbedingungen resultieren Farbmusterplättchen bestehend aus Granulat aus den Gemischen 3, 8 und 9 am kontraststärksten.

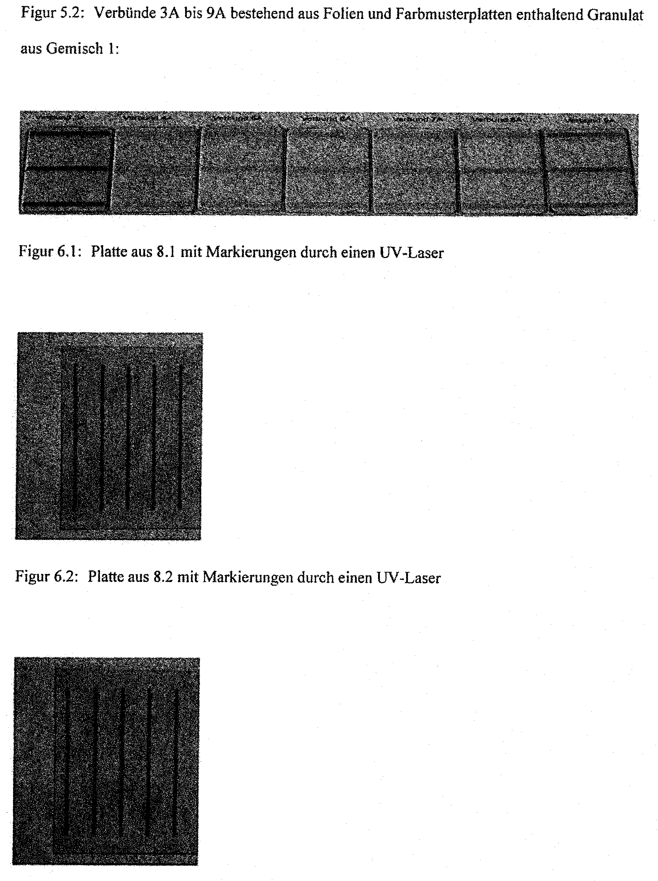

Figur 5.2 zeigt einen Eindruck über die Ergebnisse von Verbünden 3A bis 9A bestehend aus Folien und Farbmusterplatten enthaltend Granulat aus Gemisch 1.

Versuchsreihe 5.2 zeigt deutlich, dass die Markierung einer etwa 100 µm dünnen Folie bestehend aus den Granulaten der Gemische 3 bis 9 in den Verbünden möglich ist. Unter den gegebenen Prozessbedingungen resultierende Verbünde 3A, 8A und 9A sind am kontraststärksten.

### 6. Ermittlung optischer Kenndaten

Eine quadratische Markierung mit einer Kantenlänge von 10 mm wurde auf Farbmusterplatten bestehend aus Granulat der Gemische 1 bis 9 (50 mm x 75 mm x 4 mm) bei konstanter Pulsbreite (3µs) aufgebracht.
Frequenz: 8,0 [kHz]
Vorschubgeschwindigkeit: 725 [mm/s]

Die Bestimmung der Farbe in Transmission erfolgt mit einem Lambda 900 Spektralphotometer der Firma Perkin Elmer mit Photometerkugel in Anlehnung an ASTM E1348 mit den in der ASTM E308 beschriebenen Gewichtungsfaktoren und Formeln.

Die Berechnung der CIELAB Farbkoordinaten L*, a*, b* erfolgt für Lichtart D65 und 10° Normalbeobachter.

Die Transmissionsmessungen (Lichttransmission; Ty) wurden an einem Lambda 900 Spektralphotometer der Firma Perkin Elmer mit Photometerkugel nach ISO 13468-2 durchgeführt (d.h. Bestimmung der Gesamttransmission durch Messung der diffusen Transmission und direkten Transmission).

Die Ermittlung der optischen Kennzahlen erfolgt mit einer 30 mm² großen Blende zur Anpassung der Messeinheit und dem zu messenden Bereich.

Die optischen Kenndaten der markierten Bereiche wurden im Vergleich zu nicht markierten Bereichen auf den Farbmusterplatten ermittelt. Die Ergebnisse sind in nachfolgender Tabelle zusammengefasst.

| Farbmusterplatte bestehend aus Granulat aus Gemisch | Farbmusterplatte ohne Markierung | | | | Markierung auf der Farbmusterplatte | | | |
|---|---|---|---|---|---|---|---|---|
| | L* | a* | b* | Ty [%] | L* | a* | b* | Ty [%] |
| 1 | 86,4 | -0,39 | 0,58 | 68,8 | 73,0 | -0,05 | 1,29 | 45,17 |
| 2 | 92,3 | -0,36 | 1,15 | 81,4 | 82,8 | 0,01 | 2,8 | 61,8 |
| 4 | 79,0 | -0,25 | 1,48 | 54,9 | 69,9 | 0,58 | 7,5 | 40,6 |
| 5 | 86,2 | -2,71 | 0,66 | 68,4 | 78,5 | -2,25 | 2,60 | 54,1 |
| 6 | 77,8 | -0,44 | 1,09 | 52,8 | 78,9 | 0,10 | 3,83 | 54,7 |
| 7 | 91,3 | -1,36 | 1,24 | 79,1 | 58,2 | -0,12 | 3,48 | 26,1 |
| 8 | 77,0 | -0,70 | 1,88 | 51,5 | 40,5 | 1,86 | 8,96 | 11,9 |
| 9 | 85,6 | -1,56 | 2,73 | 67,2 | 31,4 | 2,34 | 10,09 | 6,8 |

### 7. Einfluss der Markierung auf die Zähigkeit der Farbmusterplatte mit Zuschlagstoff

Ein Ensemble von 3 linienförmigen Markierungen wurde in einer Breite von 3 mm und einem Abstand von 2 cm auf Farbmusterplatten bestehend aus Granulat der Gemische 1 bis 9 (60 mm x 60 mm x 2 mm) bei konstanter Pulsbreite (3 µs) aufgebracht.
Frequenz: 8,0 [kHz]
Vorschubgeschwindigkeit: 725 [mm/s]

An den derart präparierten Farbmusterplatten wurden Durchstoßversuche nach DIN EN ISO 6603-2 durchgeführt. Das Bruchverhalten sowie die Gesamtenergieaufnahme der Farbmusterplatten wurden beim Aufprall des Fallgewichts auf die markierte Seite sowie auf die nicht markierte Seite ermittelt und in nachfolgender Tabelle dargestellt. Wie ersichtlich, zeigt die Markierung der Farbmusterplatten keinen wesentlichen Einfluss auf das Bruchverhalten bzw. auf die Energieaufnahme der Farbmusterplatten.

| Farbmusterplatte bestehend aus Granulat aus Gemisch | Farbmusterplatte ohne Markierung | | Durchstoß auf die markierte Vorderseite | | Durchstoß auf die nicht markierte Rückseite | |
|---|---|---|---|---|---|---|
| | optische Beurteilung | Gesamtenergie [J] | optische Beurteilung | Gesamtenergie [J] | optische Beurteilung | Gesamtenergie [J] |
| 1 | 2,1 | 62,3 | 2,0 | 59,4 | 2,6 | 51,8 |
| 2 | 2,0 | 65,5 | 2,2 | 54,6 | 2,1 | 46,9 |
| 3 | 1,9 | 65,5 | 2,3 | 56,3 | 2,0 | 38,4 |
| 4 | 2,1 | 62,1 | 2,7 | 53,0 | 2,2 | 42,8 |
| 5 | 2,0 | 65,0 | 2,3 | 52,0 | 2,1 | 40,7 |
| 6 | 2,4 | 65,9 | 2,2 | 55,1 | 2,3 | 46,7 |
| 7 | 2,1 | 61,1 | 2,5 | 54,8 | 2,3 | 46,4 |
| 8 | 2,0 | 64,9 | 2,5 | 49,4 | 2,1 | 36,3 |
| 9 | 2,0 | 65,4 | 2,0 | 34,4 | 2,0 | 33,1 |

Die optische Beurteilung der Proben nach erfolgtem Durchstoß wurde nach folgendem Beurteilungsschema durchgeführt.

| Beurteilung | Beurteilungskriterium |
|---|---|
| 1 | kein Riss außerhalb des Dornbereichs |
| 2 | radialer / gerader Riss; stabile Ausbreitung; nicht bis zum Rand auf einer oder beiden Seiten des Dornbereichs |
| 3 | tangentialer / gebogener Riss; umlaufend maximal bis 90°; nicht bis zum Rand auf einer oder beiden Seiten des Dornbereichs |
| 4 | tangentialer / gebogener Riss; umlaufend mit mehr als 90°; nicht bis zum Rand auf einer oder beiden Seiten des Dornbereichs |
| 5 | Ausstanzen größerer kompakter Stücke als der Dombereich |
| 6 | Probe zerbricht in mehrere Stücke |

### 8. Herstellung von Bisphenol-A-Polycarbonat-Platten in einer Dicke von 15 mm mit einer modifizierten Coextrusionsschicht:

Unter der Verwendung von PC1 (lineares Bisphenol-A Polycarbonat der Bayer AG, Leverkusen mit einem Schmelzflussindex (MFR) gemäß ISO 1133 von 6 cm³/10 min bei 300°C und 1,2 kg Belastung) als Basismaterial für die Extrusion wurden Polycarbonat-Platten in 15 mm Dicke gefertigt. Während der Produktion wurde über einen Coextruder das Gemisch 10 bzw. das Gemisch 11 zugeführt, wodurch auf der unteren und oberen Seite der aus PC1 bestehenden Polycarbonat-Platte eine Außenhaut basierend aus dem jeweiligen Gemisch 10 bzw. 11 aufgebracht wurde.

### 8.1 15 mm dicke Bisphenol-A-Polycarbonat-Platte mit einer beidseitig aufgebrachten 60 µm dicken Coextrusionsschicht basierend auf Gemisch 10 enthaltend 70 ppm BlackPearls 800.

### 8.2 15mm dicke Bisphenol-A-Polycarbonat-Platte mit einer beidseitig aufgebrachten 60 µm dicken Coextrusionsschicht basierend auf Gemisch 11 enthaltend 0,03% KHDS 872-G2.

### 9. Markierungen mit einem UV-Laser

Für die Markierung der Platten aus 8.1 und 8.2 wurde ein Lasermarkierungssystem TruMark 6350 der Firma Trumpf basierend auf einem Nd:YVO₄-Lasermedium, welches eine Laserwellenlänge von 355 nm emittiert, verwendet. Der genutzte Fokusdurchmesser bei einer Optik mit einer Brennweite von 260 mm betrug 57 µm. Bei einer Pulsfrequenz von 33 kHz betrug die maximale Leistung 5 W. Die Markierungen wurden bei einer Pulsbreite von 10 ns durchgeführt.

Figur 6.1 zeigt einen Eindruck über Ergebnisse einer Platte aus 8.1 mit Markierungen durch einen UV-Laser.

Figur 6.2 zeigt einen Eindruck über Ergebnisse einer Platte aus 8.2 mit Markierungen durch einen UV-Laser.

Eine Markierung der Coextrusionsschichten aus 8.1 und 8.2 mit einem UV-Laser ist einwandfrei möglich. Es resultieren homogene und kontraststarke Markierungen auf den Bisphenol-A-Polycarbonat-Platten.

### 10. Markierungen mit einem IR-Laser DPL Genesis Marker 163 (8W)

Für die nachfolgenden Markierungsversuche wurde ein Laserbeschriftungssystem der Firma ACI Laser GmbH bestehend aus einer Workstation COMFORT mit DPL Genesis Marker 163 (8W) und der Beschriftungssoftware MagicMarkV3 verwendet. Die Laserstrahlquelle besteht aus einer Anregungsquelle (Laserdiode) gefolgt von einem Linsensystem sowie einem Resonator basierend auf einem Nd:YAG (Neodym dotierter Yttrium Aluminium Granat) Laserkristall zur Strahlerzeugung. Der resultierende Laserstrahl weist eine Wellenlänge von 1064 nm auf und wird über eine Strahlablenkeinheit nach dem Durchgang durch eine F-Theta Optik 100 auf die Platten aus 8.1 und 8.2 fokussiert.

Die Vorschubgeschwindigkeit des Lasers betrug 500 mm/s und die Pulsfrequenz wurde auf 8 kHz eingestellt. Die Pulsbreite betrug 3 µs. Der Abstand der einzelnen Linien aus der die resultierende Markierung zusammengesetzt ist betrug 0,1 mm (jeweils links in der Figur) sowie 0,05 mm (jeweils rechts in der Figur).

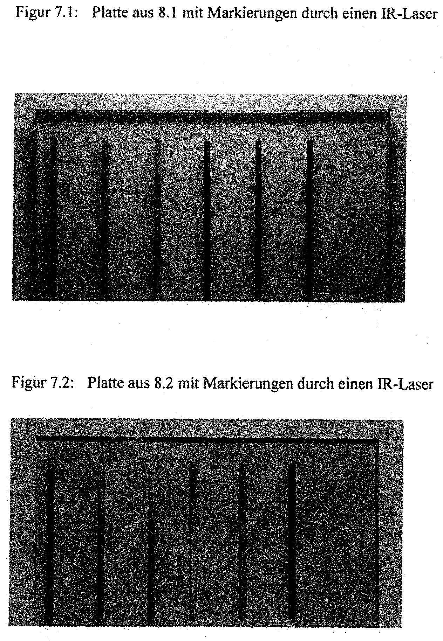

Figur 7.1 zeigt einen Eindruck über Ergebnisse einer Platte aus 8.1 mit Markierungen durch einen IR-Laser.

Figur 7.2 zeigt einen Eindruck über Ergebnisse einer Platte aus 8.2 mit Markierungen durch einen IR-Laser.

Sowohl für Platten aus Beispiel 8.1 als auch für Platten aus Beispiel 8.2 resultieren im vorliegenden Beispiel 10 unter den gegebenen Bedingungen homogene kontraststarke Markierungen.

## Patentansprüche

1. Kunststoffformteil umfassend
a) mindestens eine Substratschicht enthaltend mindestens ein thermoplastisches Polymer, wobei die Substratschicht eine Basisschicht und eine daran angrenzende Coextrusionsschicht umfasst und wobei die Coextrusionsschicht mindestens einen IR-Absorber umfasst,
b) mindestens eine Deckschicht auf mindestens einer Seite der Substratschicht,
c) optional eine Primer- oder Zwischenschicht zwischen den Schichten a) und b),
**dadurch gekennzeichnet, dass** das Kunststoffformteil in der Substratschicht Markierungen aufweist, die in den markierten Bereichen die Transparenz des Formteils im Wellenlängenbereich von 380 bis 780 nm herabsetzen.

2. Kunststoffformteil nach Anspruch 1, **dadurch gekennzeichnet, dass** die Coextrusionsschicht mindestens einen UV-Absorber umfasst.

3. Kunststoffformteil nach einem der vorhergehenden Ansprüche, **dadurch gekennzeichnet, dass** die Markierungen in der Coextrusionsschicht sind.

4. Kunststoffformteil nach einem der vorhergehenden Ansprüche, **dadurch gekennzeichnet, dass** die Markierungen keine transparenten Flächenelemente freilassen, deren mittlere Durchmesser größer als 250 mm sind.

5. Kunststoffformteil nach einem der vorhergehenden Ansprüche, **dadurch gekennzeichnet, dass** die Markierungen, unabhängig von Ihrer Form, einen mittleren Durchmesser von mindestens 5 mm und kleiner als 300 mm aufweisen.

6. Kunststoffformteil nach einem der vorhergehenden Ansprüche, **dadurch gekennzeichnet, dass** die Markierungen linienförmig sind und eine horizontale Ausrichtung aufweisen mit einer Linienbreite von 1,5 mm bis 15 mm, in einem regelmäßigen Abstand von 1,5 cm bis 10,0 cm, wobei der Bedeckungsgrad der Formteiloberfläche von 4 % - 25 % beträgt.

7. Kunststoffformteil nach einem der vorhergehenden Ansprüche, **dadurch gekennzeichnet, dass** die Markierungen linienförmig sind und eine vertikale Ausrichtung aufweisen mit einer Linienbreite von 3 mm bis 20 mm, in einem regelmäßigen Abstand von 4 cm bis 20 cm, wobei der Bedeckungsgrad der Formteiloberfläche von 2 % - 25 % beträgt.

8. Kunststoffformteil nach einem der vorhergehenden Ansprüche, **dadurch gekennzeichnet, dass** die Markierungen nicht linienförmig sind und wobei der Bedeckungsgrad der Formteiloberfläche 5 % bis 40 %, weiter bevorzugt 10 % bis 30 %, besonders bevorzugt von 15 % bis 25 % beträgt.

9. Kunststoffformteil nach einem der vorhergehenden Ansprüche, **dadurch gekennzeichnet, dass** die Markierungen eine Transparenz (Lichttransmission) von weniger als 5,0 % aufweisen.

10. Kunststoffformteil nach einem der vorhergehenden Ansprüche, **dadurch gekennzeichnet, dass** der IR-Absorber in der Coextrusionsschicht ausgewählt ist aus der Gruppe, umfassend Lanthanboride und Ruß.

11. Kunststoffformteil nach einem der vorhergehenden Ansprüche, **dadurch gekennzeichnet, dass** das thermoplastische Polymer der Substratschicht Polycarbonat ist.

12. Kunststoffformteil nach einem der vorhergehenden Ansprüche, **dadurch gekennzeichnet, dass** die Markierungen mit einem Nd:YAG-Laser mit 1064 nm Wellenlänge oder einem UV (Ultraviolett)-Laser (Nd:YVO₄-Laser) mit 355 nm Wellenlänge eingebracht werden.

13. Verwendung von Kunststoffformteilen nach einem der Ansprüche 1 bis 12 zur Herstellung von Vogelschutzverglasungen.

## Claims

1. Plastics molding comprising
a) at least one substrate layer comprising at least one thermoplastic polymer, where the substrate layer comprises a base layer and, adjacent thereto, a coextruded layer, and where the coextruded layer comprises at least one IR absorber,
b) at least one outer layer on at least one side of the substrate layer,
c) optionally a primer or intermediate layer between the layers a) and b),
**characterized in that** the plastics molding has, in the substrate layer, markings which reduce the transparency of the molding in the wavelength range from 380 to 780 nm in the marked regions.

2. Plastics molding according to Claim 1, **characterized in that** the coextruded layer comprises at least one UV absorber.

3. Plastics molding according to any of the preceding claims, **characterized in that** the markings are in the coextruded layer.

4. Plastics molding according to any of the preceding claims, **characterized in that** the markings do not leave any uncovered transparent areas of average diameter greater than 250 mm.

5. Plastics molding according to any of the preceding claims, **characterized in that** the average diameter of the markings, irrespective of the shape thereof, is at least 5 mm and less than 300 mm.

6. Plastics molding according to any of the preceding claims, **characterized in that** the markings are linear and horizontally oriented with a line width of from 1.5 mm to 15 mm, with regular separation of from 1.5 cm to 10.0 cm, where the extent of coverage of the surface of the molding is from 4% to 25%.

7. Plastics molding according to any of the preceding claims, **characterized in that** the markings are linear and vertically oriented with a line width of from 3 mm to 20 mm, with regular separation of from 4 cm to 20 cm, where the extent of coverage of the surface of the molding is from 2% to 25%.

8. Plastics molding according to any of the preceding claims, **characterized in that** the markings are not linear, and the extent of coverage of the surface of the molding is from 5% to 40%, more preferably from 10% to 30%, particularly preferably from 15% to 25%.

9. Plastics molding according to any of the preceding claims, **characterized in that** the transparency (light transmittance) of the markings is less than 5.0%.

10. Plastics molding according to any of the preceding claims, **characterized in that** the IR absorber in the coextruded layer is selected from the group comprising lanthanum borides and carbon black.

11. Plastics molding according to any of the preceding claims, **characterized in that** the thermoplastic polymer of the substrate layer is polycarbonate.

12. Plastics molding according to any of the preceding claims, **characterized in that** the markings are introduced by an Nd:YAG laser with 1064 nm wavelength, or by a UV (ultraviolet) laser (Nd:YVO₄ laser) with 355 nm wavelength.

13. Use of plastics moldings according to any of Claims 1 to 12 for the production of bird-protected glazing.

## Revendications

1. Pièce moulée en plastique, comprenant :
a) au moins une couche de substrat contenant au moins un polymère thermoplastique, la couche de substrat comprenant une couche de base et une couche de co-extrusion adjacente à celle-ci, la couche de co-extrusion comprenant au moins un absorbeur IR,
b) au moins une couche de recouvrement sur au moins un côté de la couche de substrat,
c) éventuellement une couche primaire ou intermédiaire entre les couches a) et b),
**caractérisée en ce que** la pièce moulée en plastique comprend dans la couche de substrat des marquages qui abaissent dans les zones marquées la transparence de la pièce moulée dans la plage de longueurs d'onde allant de 380 à 780 nm.

2. Pièce moulée en plastique selon la revendication 1, **caractérisée en ce que** la couche de co-extrusion comprend au moins un absorbeur UV.

3. Pièce moulée en plastique selon l'une quelconque des revendications précédentes, **caractérisée en ce que** les marquages sont dans la couche de co-extrusion.

4. Pièce moulée en plastique selon l'une quelconque des revendications précédentes, **caractérisée en ce que** les marquages ne laissent pas d'éléments de surface transparents dont le diamètre moyen est supérieur à 250 mm.

5. Pièce moulée en plastique selon l'une quelconque des revendications précédentes, **caractérisée en ce que** les marquages présentent, indépendamment de leur forme, un diamètre moyen d'au moins 5 mm et inférieur à 300 mm.

6. Pièce moulée en plastique selon l'une quelconque des revendications précédentes, **caractérisée en ce que** les marquages sont linéaires et présentent une orientation horizontale avec une largeur de ligne de 1,5 mm à 15 mm, à un écart régulier de 1,5 cm à 10,0 cm, le degré de recouvrement de la surface de la pièce moulée étant de 4 % à 25 %.

7. Pièce moulée en plastique selon l'une quelconque des revendications précédentes, **caractérisée en ce que** les marquages sont linéaires et présentent une orientation verticale avec une largeur de ligne de 3 mm à 20 mm, à un écart régulier de 4 cm à 20 cm, le degré de recouvrement de la surface de la pièce moulée étant de 2 % à 25 %.

8. Pièce moulée en plastique selon l'une quelconque des revendications précédentes, **caractérisée en ce que** les marquages ne sont pas linéaires, le degré de recouvrement de la surface de la pièce moulée étant de 5 % à 40 %, de manière davantage préférée de 10 % à 30 %, de manière particulièrement préférée de 15 % à 25 %.

9. Pièce moulée en plastique selon l'une quelconque des revendications précédentes, **caractérisée en ce que** les marquages présentent une transparence (transmission de lumière) inférieure à 5,0 %.

10. Pièce moulée en plastique selon l'une quelconque des revendications précédentes, **caractérisée en ce que** l'absorbeur IR dans la couche de co-extrusion est choisi dans le groupe comprenant les borures de lanthane et le noir de carbone.

11. Pièce moulée en plastique selon l'une quelconque des revendications précédentes, **caractérisée en ce que** le polymère thermoplastique de la couche de substrat est le polycarbonate.

12. Pièce moulée en plastique selon l'une quelconque des revendications précédentes, **caractérisée en ce que** les marquages sont introduits avec un laser Nd:YAG ayant une longueur d'onde de 1 064 nm ou un laser UV (ultraviolet) (Nd:YVO₄) ayant une longueur d'onde de 355 nm.

13. Utilisation de pièces moulées en plastique selon l'une quelconque des revendications 1 à 12 pour la fabrication de vitrages protecteurs contre les oiseaux.
